# EUROPEAN PATENT APPLICATION

(11) **EP 2 312 594 A1**
(43) Date of publication of application: **20.04.2011**
(21) Application number: 09794468.0
(22) Date of filing: 08.07.2009
(51) Int. Cl.: H01C 7/02, H01M 2/34

(54) **PTC DEVICE AND ELECTRIC DEVICE CONTAINING SAME**

(30) Priority: 10.07.2008 JP 2008180156
(71) Applicant: Tyco Electronics Japan G.K., Takatsu-ku Kawasaki-shi Kanagawa 2138535 (JP)
(72) Inventor: KOYAMA, Hiroyuki, Ibaraki 300-0626 (JP)
(74) Representative: Johnstone, Douglas Ian
(86) International application number: PCT/JP2009/062442
(87) International publication number: WO 2010/005024

(57) **Abstract**

Provided is a PTC device in which deterioration of the reliability of a PTC element is restrained as much as possible. Said PTC device is comprised of a PTC element (14), which is comprised of a laminar PTC element and metal electrodes provided on either side thereof, and a retaining metal layer retaining insulation layer (12), which is comprised of an insulation layer (16) and a metal layer (18) provided on one of the primary surfaces of the insulation layer, wherein one of the metal electrodes of the PTC element is provided on the metal layer to electrically connect them together.

## Description

### [Field of the Invention]

The present invention relates to a PTC device comprising a PTC component, in particular a PTC device comprising a polymer PTC component that is used as a circuit protection device, as well as an electrical or electronic apparatus comprising such a device.

### [Background Art]

Polymer PTC (Positive Temperature Coefficient) components are widely used in various electrical or electronic apparatuses to prevent important elements composing the apparatus from breaking down if an excessively large current flows in a power circuit, etc. Such a component itself is well known, and usually comprises a PTC element normally in laminar form and composed of a polymer composition which comprises a polymer having conductive fillers dispersed therein, and metal electrodes, e.g. metal foil electrodes which are disposed on the facing main surfaces of the PTC element.

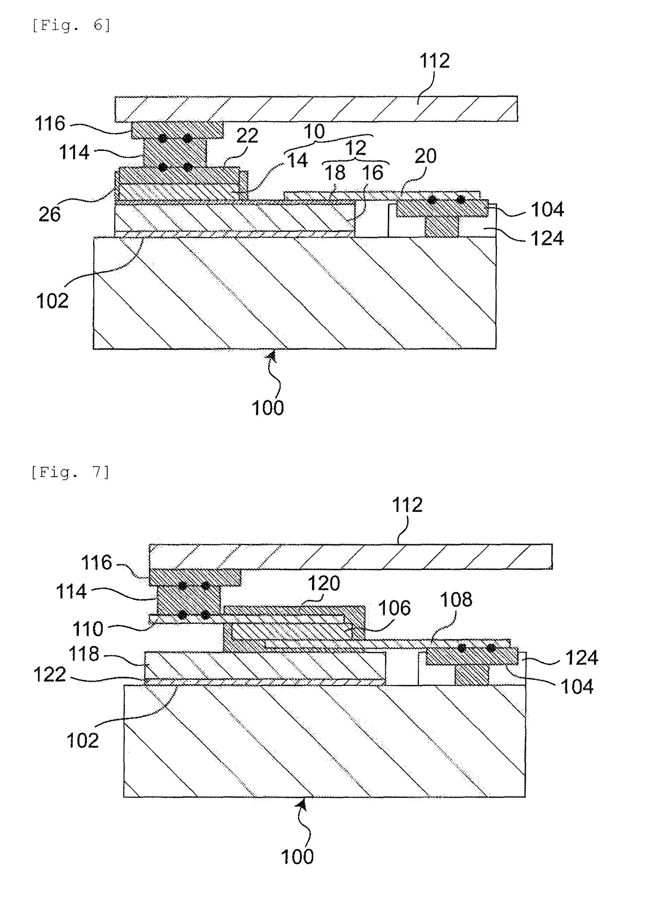

For example, a PTC component is used in a rechargeable battery pack as an electrical apparatus. The battery pack has a cathode terminal at its one end, and the PTC component is electrically connected to the cathode terminal through a lead. Figure 7 shows an end portion of such a battery pack schematically when seeing the same from its side. In Figure 7, in order to see the state of the PTC component and various elements combined therewith, they are shown in a schematic cross-sectional view.

In the illustrated battery pack 100, a PTC component 106 is electrically connected to a cathode terminal 104 of the battery pack, which terminal is positioned on a sealing member 102 disposed on the end portion of the pack. This PTC component 106 comprises a laminar PTC element and metal electrodes provided on the main surface of each side of the PTC element (for simplicity, the PTC element and the metal electrodes are shown as an integral part). The PTC component has a lower lead 108 and an upper lead 110 which are connected electrically to the metal electrodes, and protrude outwards beyond the sides of the PTC element. Specifically, the lower lead 108 is connected electrically to the cathode terminal 104, and the upper lead 110 is connected electrically to other prescribed electrical element or electrical circuit, for example, as illustrated, a wiring substrate 112 (e.g., a PCM - printed circuit module) having a control function to protect the battery pack from excessive current and the like when recharging and/or discharging. Thus, by virtue of the PTC component 106 being disposed and the lead being connected thereto, the PTC component functions as a circuit protection device.

When disposing the PTC component 106 in and connecting to the battery pack 100 as described above, the lower lead 108 is directly connected by welding to the cathode terminal 104, while the upper lead 110 is electrically connected to the wiring substrate 112 through a bendable lead 1 14 as illustrated. Resistance welding, for example, is used when connecting in this way. During the resistance welding, welding is performed by pressing together the portions to be welded. It is noted that in the drawing, the welded portions are shown with black circles. For example, while the lower lead disposed on the metal electrode of the PTC component 106 is pressed against the cathode terminal 104, or the bendable lead 114 which has previously been connected to a connection terminal 116 of the wiring substrate 112 is pressed against the upper lead 110, those parts are connected together. It is noted that in the illustrated embodiment, after connecting the bendable lead 114 to the upper lead 110, the lead 114 is shown in the bent state such that, by bending the lead 114 approximately 90° so that its cross-section becomes an L-shape while the wiring substrate 112, which has been positioned roughly to the side of the PTC component 106, is now positioned above the PTC component 106.

One of requirements that the PTC component used as described above should meet is that the resistance of the PTC component itself be small at normal times. However, it has been noticed by the inventor of the present application that even if the resistance of the PTC component itself is low, the reliability of the PTC component may become inadequate (for example, the trip temperature rises) when disposed on an electrical apparatus such as a battery pack as described above. Such a decline in reliability like this may cause the PTC component disposed in a prescribed circuit not to trip under the envisioned conditions (for example, to trip at a temperature above the prescribed temperature), and therefore not to function as prescribed as a circuit protection device, which is not desirable. Such a decline in the reliability is undesirable when the PTC component is used as a circuit protection device, not only in the embodiment where it is used on a battery pack, but also in basically cases where it is used in any other electrical apparatus.

### [Prior Patent Reference]

### [Patent Reference]

Patent Reference 1:
   Japanese Patent Kokai Publication No. 2003-346917

### [Summary of the Invention]

### [Problem to be Solved by the Invention]

As discussed above, it is undesirable for the reliability of the PTC component to decline when the PTC component is used as a circuit protection device. Therefore, it is desirable that a search for the cause of such decline in the reliability is carried out, based on which a PTC device is provided which suppresses the decline in the reliability as much as possible. For example, when using a PTC component as a circuit protection device in an electrical apparatus such as a battery pack, it is particularly desirable that increases in the resistance of the PTC component be suppressed.

### [Means to Solve the Problem]

In view of the above problem, the inventor applied himself to considering the reason when the reliability of the PTC component declines. As a result, a concept has been reached that one very likely factor causing the decline in the reliability is a force operating on the PTC component when an electrical apparatus is manufactured by disposing the PTC component on an electrical element such as a cathode terminal and connecting them electrically, a forces that continues to operate on the PTC component after such connection, and/or a force newly operating the PTC component after such connection. However, it is noted that this concept is one possibility and the scope of the present invention is not bound by the concept.

Directions in which such forces operate are in various ones as to the PTC component, in particular as to the PTC element constituting the PTC component, as a result of which the PTC component is deformed (e.g., twisted, warped, compressed, and/or stretched). In reality, such deformation may not occur owing to the stiffness of the PTC component (latent deformation), but even such case, forces are operating in directions toward such deformations.

It is believed that as a result of such deformation or latent deformation, the positional relationship between the polymer material and the conductive fillers dispersed therein in the PTC element is subtly affected, so that the resistance of the PTC component at a prescribed trip temperature becomes lower, which affects the reliability of the PTC component.

As a result of further studies based on the above concept, the present invention provides, as a device comprising a PTC component with a decline in reliability suppressed, a PTC device comprising:
a PTC component comprising a laminar PTC element and metal electrodes disposed on both sides thereof; and
a metal layer-retaining insulating layer which comprises an insulating layer and a metal layer disposed on one of main surfaces of the insulating layer, wherein one of the metal electrodes of the PTC component is disposed on the metal layer, and those two are electrically connected.

In a preferred embodiment of the present invention, the PTC device further comprises a lead disposed on the metal layer of the metal layer-retaining insulating layer. Through this lead, the PTC component can be connected electrically to a prescribed electrical element (e.g., a cathode terminal of a battery pack), a prescribed wiring substrate (e.g., a circuit protection substrate, in particular a connection terminal thereof), and the like. In such a PTC device, the lead disposed on the metal layer of the metal layer-retaining insulating layer functions as a first lead, and the PTC device preferably has further a second lead which is connected electrically to the other metal electrode of the PTC component. This second lead functions to electrically connect the PTC component to other prescribed electrical elements, for example a wiring substrate (if the above-described electrical element is a cathode terminal), or a cathode terminal (if the above-described electrical element is a circuit protection substrate, in particular a connection terminal thereof), and the like.

The present invention also provides an electrical apparatus comprising the PTC device according to the present invention. In particular, the PTC component of the PTC device can function as a circuit protection device in the electrical apparatus.

### [Effect of the Invention

In the battery pack shown in Figure 7, when the PTC component is disposed between the sealing member 102 and the wiring substrate 112, for example the lower lead 108 of the PTC component is, as described above, connected to the cathode terminal 104, after which the upper lead 110 is connected to the lead 114 of the wiring substrate 112 to which the bendable lead 114 has previously been connected, followed by bending the lead 114. In the case where the PTC component is disposed in this way, while the PTC component is independent without being supported by any element (in particular, in the state where the PTC component is floating), it is welded to the cathode terminal 104 and the lead 1 14.

Also, after such welding, the lead 114 is bent with the PTC component 106 maintained in the independent state.
In this case, a bending force works on the PTC component 106 through the upper lead 110 with the lower lead 108 affixed to the cathode terminal 104.

As shown in Figure 7, an insulating layer 118 is, in some cases, disposed on the sealing member 102 under the PTC component 106 after or before the PTC component is connected to the cathode terminal 104. This resin layer 118 works to restrict the displacement of the PTC component when a large force works on the PTC component 106. Such an insulating layer 118 and the PTC component are separated with a gap between them.

This gap is filled if required, after the PTC component 106 is electrically connected as prescribed through the leads 108 and 110, by a sealing resin 120 supplied to the area around the PTC component and the leads. Although in Figure 7, the PTC component 106 is illustrated as being disposed in parallel to the sealing member 102, there are few cases where it is substantially disposed in parallel, and it is not intended that the PTC component 106 is preliminarily positioned relative to the sealing member 102. In the illustrated embodiment, the resin layer 118 is affixed to the sealing member 102 by means of a double-faced adhesive tape 122.

During the process of such welding and bending, forces in various directions work on the upper lead 110 and the lower lead 108, and the forces work on the PTC component 106 and therefore on the PTC element. Such forces working on the PTC element become a factor in decreasing the reliability of the PTC component.

By contrast, in the PTC device of the present invention, in order to suppress the effect of the forces thus working on the PTC element as much as possible, the PTC component is disposed beforehand on and substantially fixed to the metal layer-retaining insulating layer so that they are made integral; through this, various forces that may work on the PTC component (or the PTC element) as described above can be buffered by the metal layer-retaining insulating layer, as a result of which the effect of such forces can be suppressed as much as possible.

When the PTC element constituting the PTC component is particularly thin, for example 0.5 mm or less, the effect of the forces working in various directions on the PTC component is extremely large; therefore the effect of the present invention is particularly advantageous. Further, because the PTC device of the present invention may be disposed directly on the electrical element via the metal layer-retaining insulating layer, the temperature of the electrical is easier to transmit to the PTC component than when the PTC component is connected to the electrical element in the floating state as described above. As a result, the sensitivity of the PTC component is improved.

### [Brief Explanation of the Drawings]

[Figure 1] Figure 1 shows a side of one embodiment of the PTC device according to the present invention as a schematic cross-section view.
[Figure 2] Figure 2 shows a side of other embodiment of the PTC device according to the present invention as a schematic cross-sectional view.
[Figure 3] Figure 3 shows a side of a further embodiment of the PTC device according to the present invention as a schematic cross-sectional view.
[Figure 4] Figure 4 shows a side of an electrical apparatus in which a PTC device according to the present invention as shown in Figure 1 is incorporated, as a schematic cross-sectional view.
[Figure 5] Figure 5 shows a side of an electrical apparatus in which a PTC device according to the present invention as shown in Figure 2 is incorporated, as a schematic cross-sectional view.
[Figure 6] Figure 6 shows a side of an electrical apparatus in which a PTC device according to the present invention as shown in Figure 3 is incorporated, as a schematic cross-sectional view.
[Figure 7] Figure 7 shows a side of a battery pack in which a prior art PTC device is incorporated, as a schematic cross-sectional view.

### [Explanation of the References]

10 - PTC device;
12 - metal layer-retaining insulating resin layer;
14 - PTC component; 16 - insulating resin layer;
18 - metal layer; 20 - first lead; 22 - second lead;
24 - double-sided adhesive tape; 26 - sealing resin;
30 - metal layer; 100 - battery pack; 102 - sealing member;
104 - cathode terminal; 106 - PTC component;
108 - lower lead; 110 - upper lead; 112 - wiring substrate;
114 - lead; 116 - connection terminal;
118 - insulating resin layer; 120 - sealing resin;
122 - double-sided adhesive tape; 124 - insulating resin.

### [Embodiments to Implement the Invention]

The present invention is described more specifically in more detail below with reference to the drawings. Elements, throughout the drawings, indicated by the same reference numbers are intended to denote elements having substantially the same functions.

The PTC component used in the PTC device according to the present invention is well-known, and the laminar PTC element and the metal electrodes and the like which constitutes the PTC component are also well-known. The term "PTC component" is used in the meaning of the term generally used; and it is particularly preferred that the PTC component comprises a PTC element formed in a laminar shape from a so-called PTC composition (i.e. a polymer PTC element), and a first metal electrode (in particular a foil electrode) and a second metal electrode (in particular a foil electrode) disposed on each main surface of the PTC element. Further, the polymer PTC element is composed of a so-called conductive polymer composition wherein electrically conductive fillers (for example carbon fillers, metal fillers (fillers of copper, nickel, nickel-cobalt alloy and the like) are dispersed in a polymer material (for example polyethylene, polyvinylidene fluoride and the like). Typically, the PTC element may be obtained by extrusion molding of such a composition.

The PTC component is typically an element in a laminar shape or disk shape as a whole which has metal electrodes (typically metal foil electrodes) laminated over the entire surfaces of the main surfaces on both sides of the laminar PTC element. The PTC element may be, for example, disk-shaped or a thin rectangular shape.

The metal layer-retaining insulating layer is also well-known. Specifically, the following may be used as the metal-retaining ceramic layer; one having a ceramic layer (for example a ceramic substrate) as the insulating layer, i.e. having an insulating ceramic layer, that is, a metal layer-retaining ceramic layer , or one having a resin layer as the insulating layer, i.e. having an insulating resin layer, that is a metal layer-retaining insulating resin layer. In the present invention, one having the insulating resin layer is preferred, but the above-described effect may also be obtained, given some difference in degree, even with one having the ceramic layer.

With respect to ones having the ceramic layer, those for example are commercially available which have a metal layer such as Mo/Mn (molybdenum/manganese), or W (tungsten) layer printed on a ceramic layer such as an alumina layer followed by being fired and then being plated with Ni (nickel), Au (gold) or the like, whereby such metal layer is disposed on the ceramic layer, and these may also be used in the present invention.

With respect to the metal layer-retaining insulating resin layer, one wherein a metal layer such as a copper foil is pressed onto an insulating resin layer in which an epoxy resin or the like is impregnated in a glass cloth, thereby disposing/bonding the metal layer on such an insulating resin layer, may be used in the present invention. Such a metal layer-retaining insulating resin layer is also a so-called metal-lined insulating resin layer, and various types thereof are commercially available.

More particularly, the metal layer-retaining insulating resin layer comprises an insulating resin layer, and a metal layer bonded thereon, for example in the form of a metal foil, a metal sheet (thicker than the metal foil), and the like, and various types of the metal layer-retaining insulating resin layer are commercially available. The insulating resin layer may be formed of any suitable insulating resin; it may be formed, for example, of a resin such as a phenol resin, an epoxy resin, a fluorine resin, and the like. It is noted that the insulating resin layer may also be one in which an insulating resin is impregnated in paper, glass or the like used as the substrate (i.e. an insulating resin impregnated substrate), and usually using such impregnated one is preferred.

The metal layer may be formed of any suitable metal, and may for example be formed of a metal such as copper, gold, molybdenum/manganese, or tungsten. In one embodiment of the present invention, various metal layer-lined resin substrates commercially available for forming wiring substrates may be used as the metal layer-retaining insulating resin layer of the device according to the present invention. For example, copper-lined paper matrix phenol resin layer, copper-lined paper/glass cloth matrix epoxy resin layer, and the like may be used as the metal layer-retaining insulating resin layer of the PTC device according to the present invention.

In the PTC device of the present invention, the PTC component, more particularly the metal electrode thereof, is disposed on a part of the metal layer of the metal layer-retaining insulating layer, and these are electrically connected. A lead is disposed on at least a part of the remaining part of the metal layer and these are electrically connected.

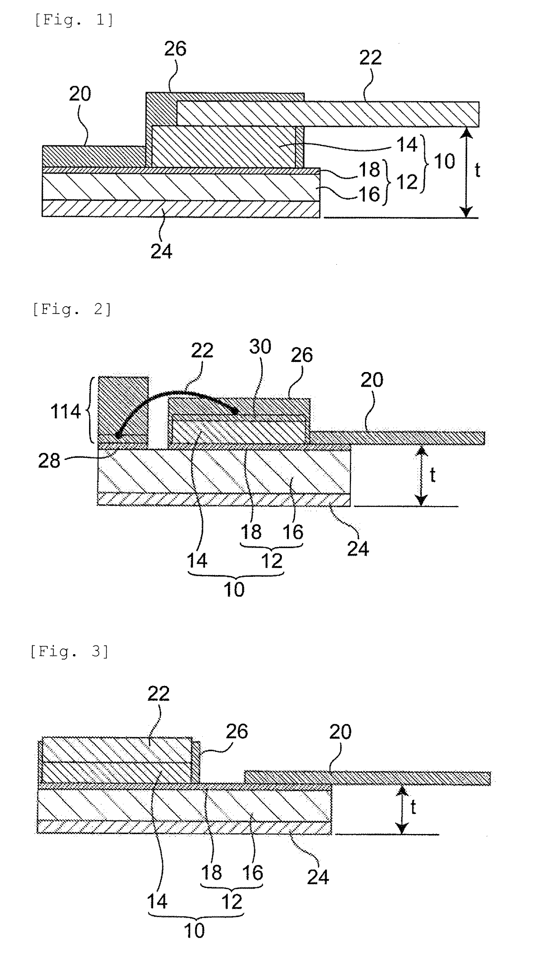

Figures 1 to 3 show various embodiments of the PTC device according to the present invention as schematic side cross-sectional views. It is noted that since it is preferred that a metal layer-retaining insulating resin layer is used as the metal layer-retaining insulating layer as described above, the use of a metal layer-retaining insulating resin layer is referred to as an example in the more detailed description below. However, using a metal layer-retaining ceramic layer is similar.

The PTC device 10 comprises a metal layer-retaining insulating resin layer 12 and a PTC component 14 disposed thereon. The metal layer-retaining insulating resin layer 12 comprises an insulating resin layer 16 and a metal layer 18 disposed thereon, and these are, for example, bonded together by thermal compression when forming the metal layer-retaining insulating resin layer 12. It is noted that although the PTC component comprises a laminar PTC element and metal electrodes disposed on the main surfaces on both sides thereof, these are not distinguished in the illustrated embodiment, but are shown as an integrated PTC component 14.

The connection between the PTC component 14 and the metal layer-retaining insulating resin layer 12 may be made in any suitable method. For example, it may be done by disposing for example solder paste, a solder ball, a solder ribbon or the like between them and heating in a reflow oven. Thus, in the illustrated embodiment, the lower metal electrode of the PTC component is connected electrically to the metal layer 18 of the metal layer-retaining insulating resin layer.

The PTC device 10 of the present invention preferably further comprises, as illustrated, a lead 20 disposed, as a first lead, on the metal layer 18 of the metal layer-retaining insulating resin layer (in particular, on a portion which corresponds to the above described "at least a part of the remaining part of the metal layer"). The lead 20 works to electrically connect the PTC component 14, in particular one of its metal electrodes (specifically the lower electrode), to a prescribed electrical element (e.g., a wiring substrate 112 or its connection terminal 116, a sealing member 102 or its cathode terminal 104, other lead 114 or the like) through the metal layer 18. The first lead may be of any suitable shape, and for example, it may be in the shape of a strip, a sheet, a wire or the like. Further, the first lead may be made of any suitable material. The connection between the first lead 20 and the metal layer 18 may be made, similarly to the connection between the PTC component 14 and the metal layer-retaining insulating resin layer 12 as described above, in using any suitable method.

The illustrated embodiment comprises other lead 22 that works to electrically connect the other metal electrode (specifically the upper electrode) of the PTC component 14 to other prescribed electrical element. In the present specification, this other lead is also called the second lead to distinguish it from the first lead described above. As with the first lead described above, this second lead may be of any shape, and may for example in the shape of a strip, a sheet, a wire or the like as illustrated. The second lead also may be made of any suitable material. The connection between the second lead 22 and the metal electrode of the PTC component may be made, similarly to the connection between the PTC component 14 and the metal layer-retaining insulating resin layer 12 described above, in using any suitable method. It is noted that as illustrated in Figure 2, the PTC device according to the present invention may have a further element such as a metal layer 30 between the second lead 22 and the PTC component 14, and such metal layer 30 is wire bonded to a bendable lead 114 which is attached to a metal layer 28 which is not electrically connected to the metal layer 18 of the metal layer-retaining insulating layer 12.

As shown in Figures 1 to 3, a double-sided adhesive tape 24 is preferably applied to the lower side of the bottom of the metal layer-retaining insulating resin layer 12 in the PTC device of the present invention. For example, when the PTC device according to the present invention is used in the battery pack shown in Figure 7, one side of the double-sided adhesive tape 24 is bonded to the outer surface of the cap 102, and the other side is bonded to the metal layer-retaining insulating resin layer. In this embodiment, the PTC device of the present invention may be attached to a suitable base member (for example, an electrical element on which the PTC device is positioned, such as a sealing member (or cap)) with the double-sided adhesive tape 24.

Upon attaching to for example the sealing memer as a suitable base member, if the PTC device in Figure 1, or Figure2 or Figure 3 is disposed on the sealing member such that the distance (shown as "t") from the bottom of the double-sided adhesive tape 24 to the bottom of the second lead 22 (in the case of Figure 1) or the first lead 20 (in the case of Figure 2 or Figure 3) is made substantially equal to the height (shown as "t"') that the cathode terminal protrudes from the sealing member, the bottom of the second lead or the first lead comes to the state wherein it is positioned just on the cathode terminal (that is, the state wherein the level of the bottom of the second lead or the first lead is substantially equal to the level of the top of the cathode terminal). In such state, when the lead and the cathode terminal are welded together so as to electrically connect them, such connection minimizes an unnecessary force which works on the PTC component.

Further, as shown in Figures 1 to 3, the PTC component 14 is preferably sealed with a resin 26 in the PTC device of the present invention. This resin has a function of preventing oxidation of the electrically conductive fillers contained in the PTC element, and an epoxy resin, for example, may be used. Thus, it is preferably supplied so as to cover at least exposed parts of the PTC element which constitute the PTC component 14, and preferably to cover the entire exposed parts of the PTC component. By sealing with the resin in this way, the oxidation of the electrically conductive fillers contained in the PTC element can be suppressed, as a result of which increase in the resistance of the PTC component can be suppressed as much as possible.

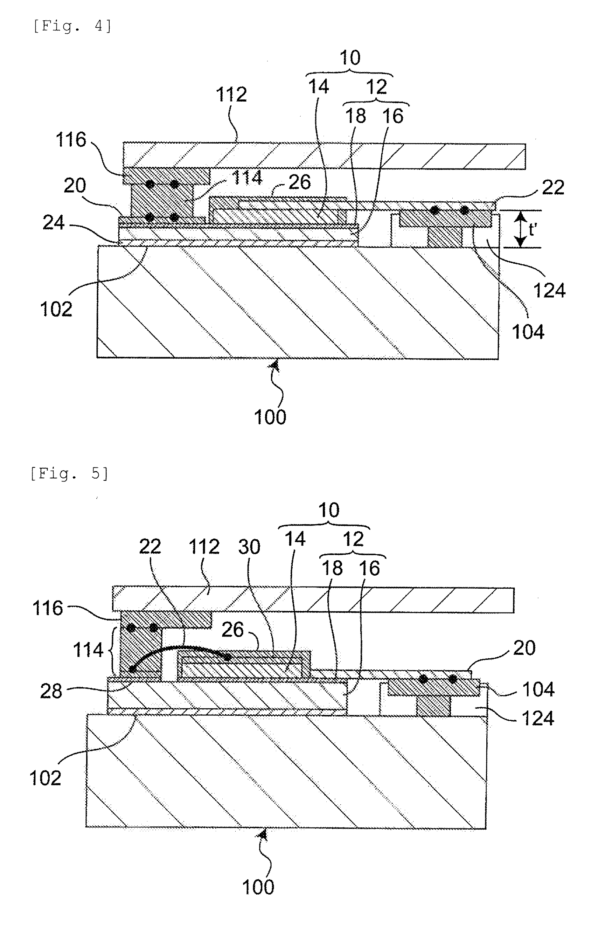

A battery pack 100 as an electrical apparatus in which the PTC device according to the present invention shown in Figure 1 is incorporated is shown in Figure 4, similarly to Figure 1, as a schematic side cross-sectional view. In Figure 4, the PTC device 10 of the present invention has its second lead 22 welded to the cathode terminal 104 of the battery pack 100. The first lead 20 is disposed on the metal layer 18 of the metal layer-retaining insulating resin layer 12, and the first lead 20 is connected, via the lead 114 as other lead connected thereto, to the wiring substrate 112. In the illustrated embodiment, the first lead 20 and the other lead 114 are welded, and the other lead 114 and the wiring substrate 112 (more particularly its connection terminal 116) are welded. It is noted that the welded portions are shown with black circles. The other lead 114 is a bendable lead, and after being connected to the connection terminal 116 of the wiring substrate 112, it is bent as illustrated, as a result of which the wiring substrate 112 may be positioned over the PTC component 14.

In the embodiment shown in Figure 4, the PTC device of the present invention is affixed, using a double-sided adhesive tape 24, to the sealing member 102 (i.e., the top edge of the battery pack), such that the second lead 22 is positioned just on the cathode terminal 104 which protrudes upward from the sealing member 102. In this case, the PTC device 10 may be located on the sealing member 102 without an unnecessary force substantially working on the PTC component 14. When the other lead 114 is connected to the first lead 20 of the PTC device thus surely located, an unnecessary force which works on the PTC component 14 may also be suppressed during the connection.

It is noted that instead of using a double-sided adhesive tape, a PTC device may also be used that has an insulating resin layer 16 of which thickness corresponds to the thickness of the double-sided adhesive tape. In this case, the PTC device 10 may not be affixed to the sealing member 102, but the PTC device is substantially located on the sealing member 102 relative to the protruding direction of the cathode terminal since the sum of the thicknesses of the metal layer-retaining insulating resin layer 12 and the PTC component 14 is substantially equal to the protruding height of the cathode terminal 104. In this case also, an unnecessary force that may work on the PTC component is decreased as much as possible.

A battery pack 100 as an electrical apparatus in which the PTC device of the present invention shown in Figure 2 is incorporated is shown in Figure 5 as a schematic side cross-sectional view, similarly to Figure 1. In Figure 5, the PTC device 10 of the present invention has its first lead 20 welded to the cathode terminal 104 of the battery pack. The first lead 20 is disposed on the metal layer 18 of the metal layer-retaining insulating resin layer 12, and the second lead 22 is in the shape of a wire (e.g., an Al wire) one end of the second lead is wire-bonded to a metal layer 30 provided, as needed, on the electrode of the PTC component, and the other end of the second lead is connected to the bendable lead 1 14 (in the bent state in Figure 5) provided on other metal layer 28 of the metal layer-retaining insulating resin layer. This lead 114 is connected to the connection terminal 116 of the wiring substrate 112 by for example welding. It is noted that as in Figure 4, the welded portions are shown with black circles.

In the illustrated embodiment, as in the embodiment shown in Figure 4, the sum of the thicknesses of the metal layer-retaining insulating resin layer 12 and the double-sided adhesive tape 24 is configured to be substantially equal to the protruding height of the cathode terminal 104, and as in the case of Figure 4, the PTC component in this embodiment is also substantially located.

A battery pack 100 as an electrical apparatus in which the PTC device of the present invention shown in Figure 3 is incorporated is shown in Figure 6 as a schematic side cross-sectional view, similarly to Figure 1. In the embodiment shown in Figure 6, the PTC device 10 according to the present invention has its first lead 20 welded to the cathode terminal 104 of the battery pack, as in the embodiment shown in Figure 5. A second lead 22 is provided on the top of the PTC component, and a bendable lead 114 (in the bent state in Figure 6) is connected thereto, this lead 114 being connected to the connection terminal 116 of the wiring substrate 112. As in Figure 4, the welded portions are shown with black circles.

In the illustrated embodiment also, as in the embodiment shown in Figure 5, the sum of the thicknesses of the metal layer-retaining insulating resin layer 12 and the double-sided adhesive tape 24 is configured to be substantially equal to the protruding height of the cathode terminal 104, and as in the case of Figure 5, the PTC component in this embodiment is also substantially located.

In the embodiments in Figures 4 to 6, the PTC component is located to the metal layer-retaining insulating resin layer 12 substantially in a stable condition, so that an unnecessary force that may work on the PTC component is decreased as much as possible, as a result of which the increase in the resistance of the PTC component is suppressed as much as possible. Further, in Figures 4 to 7, the insulating resin 124 supplied around the cathode terminal 104 is also shown.

Further, as is evident when the embodiments shown in Figures 4 to 6, the position of the wiring substrate 112 in the embodiment shown in Figure 5 wherein the metal layer 18 of the metal layer-retaining insulating resin layer 12 is connected to the cathode terminal 104 through the lead 20 is relatively lower than in the embodiments in Figures 4 and 6 wherein the metal electrode of the PTC component which electrode is not connected to the metal layer-retaining insulating resin layer 12 is connected to the cathode electrode 104 through the lead 22 or 20. In truth, the position of the wiring substrate 112 may be lowered by the thickness of the PTC component. This means that, if the embodiments shown in Figures 4 and 6 are adopted, the size of the battery pack including the wiring substrate may be made relatively compact.

When the PTC device according to the present invention (for example, one shown in Figure 1) is used, an electric or electronic apparatus according to the present invention (for example, a battery pack 100 as shown in Figure 4) can be produced by the following production process comprising the steps (1) to (3) in which apparatus one electric element (for example, a substrate 112 having a protection circuit) is connected to the other electric element (for example, sealing member 102, and particular its cathode terminal 104) through the PTC device:
(1) step of first preparing the above described PTC device 10 according to the present invention comprising the PTC component 14 and the metal layer-retaining insulating layer 12; then
(2) step of connecting the metal layer 18 of the metal layer-retaining insulating layer and the lead 20, and also connecting the lead 22 and the metal electrode of the PTC component which metal electrode is positioned on the side of the PTC component where no metal layer-retaining insulating layer is connected; and then
(3) step of connecting the lead 20 and said one electric element (such as the substrate 112 having the protection circuit) and also connecting the lead 22 and said other electric element (such as the sealing member 102, and particularly its cathode terminal).
   As readily seen, the steps (1) and (2) of the above described process for the production of the electric apparatus corresponds to the process for the production of the PTC device according to the present invention as shown in Figure 1.

When the PTC device according to the present invention (for example, one shown in Figure 2) is used, an electric or electronic apparatus according to the present invention (for example, a battery pack 100 as shown in Figure 5) can be produced in other embodiment by the following production process comprising the steps (A) to (C) in which apparatus one electric element (for example, a substrate 112 having a protection circuit) is connected to the other electric element (for example, sealing member 102, and particular its cathode terminal 104) through the PTC device:
(A) step of preparing the above described PTC device 10 according to the present invention comprising the PTC component 14 and the metal layer-retaining insulating layer 12; then
(B) step of connecting the metal layer 18 of the metal layer-retaining insulating layer and the lead 20, and also connecting, through the lead 22, the metal electrode of the PTC component which metal electrode is positioned on the side of the PTC component where no metal layer-retaining insulating layer is connected and the lead 114 provided on other metal layer 28 on the insulating layer which metal layer is separated from the metal layer of the metal layer-retaining insulating layer; and then
(C) step of connecting the lead 114 and said one electric element (such as the substrate 112 having the protection circuit) and also connecting the lead 20 and said other electric element (such as the sealing member 102, and particularly its cathode terminal).
As readily seen, the steps (A) and (B) of the above described process for the production of the electric apparatus corresponds to the process for the production of the PTC device according to the present invention as shown in Figure 2.

When the PTC device according to the present invention (for example, one shown in Figure 3) is used, an electric or electronic apparatus according to the present invention (for example, a battery pack 100 as shown in Figure 6) can be produced in a further embodiment by the following production process comprising the steps (a) to (c) in which apparatus one electric element (for example, a substrate 112 having a protection circuit) is connected to the other electric element (for example, sealing member 102, and particular its cathode terminal 104) through the PTC device:
(a) step of first preparing the above described PTC device 10 according to the present invention comprising the PTC component 14 and the metal layer-retaining insulating layer 12; then
(b) step of connecting the metal layer 18 of the metal layer-retaining insulating layer and the lead 20, and also connecting the lead 22 and the metal electrode of the PTC component which metal electrode is positioned on the side of the PTC component where no metal layer-retaining insulating layer is connected; and then
(c) step of connecting the lead 22 and said one electric element (such as the substrate 112 having the protection circuit) and also connecting the lead 20 and said other electric element (such as the sealing member 102, and particularly its cathode terminal).
As readily seen, the steps (a) and (b) of the above described process for the production of the electric apparatus corresponds to the process for the production of the PTC device according to the present invention as shown in Figure 3

. It is noted that the connection of the above described steps (2), (3), (B), (C), (b) and (c) may be carried out in any appropriate manner as long as it is able to electrically connect. Specifically, the objects to be connected may be connected directly (for example, by means of welding) or indirectly (for example, by means of connecting the objects to be connected while inserting an electrically conductive member (for example, other lead such as a bendable lead 114, an electrically conductive material such as a solder material or the like) between them).

In preferable embodiments, the steps (2) and (b) are carried out by indirectly connecting in a reflow process which uses a solder material, and the steps (3), (C) and (c) are carried out by directly connecting with welding or indirectly connecting with welding while inserting therebetween a lead 114 in various forms as required.

It is noted that in the step (B), the metal layer 18 of the metal layer-retaining insulating layer and the lead 20 are indirectly connected in a reflow process using a solder material, and the metal electrode of the PTC component which metal electrode is positioned on the side of the PTC component where the metal layer 18 is not connected and the lead 114 provided on other metal layer 28 on the insulating layer which metal layer is separated from the metal layer of the metal layer-retaining insulating layer are connected through the lead 22 one end of which is connected to the metal layer 30 which is provided on the metal electrode of the PTC component 14.

### [Industrial Applicability]

Since the PTC component is disposed on the metal layer-retaining insulating resin layer in the PTC device according to the present invention, an unnecessary force working on the PTC component may be decreased as much as possible, so that the increase in the resistance of the PTC component may be suppressed.

It is noted that the present application claims a priority based on Japanese Patent Application No. 2008-180156 (filing date: July 10, 2008, title of the invention: PTC device and electrical apparatus containing the same), which is incorporated herein by reference in its entirety.

## Claims

1. A PTC device comprising:
a PTC component comprising a laminar PTC element and metal electrodes disposed on both sides thereof; and
a metal layer-retaining insulating layer which comprises an insulating layer and a metal layer disposed on one of main surfaces of the insulating layer, wherein one of the metal electrodes of the PTC component is disposed on the metal layer, and they are electrically connected.

2. The PTC device according to Claim 1, wherein it further comprises a lead disposed on the other metal electrode of the PTC component or on the metal layer of the metal layer-retaining insulating layer.

3. The PTC device according to Claim 2, wherein the lead functions as a first lead disposed on the metal layer of the metal layer-retaining insulating layer, and
the other metal electrode of the PTC component comprises a second lead which is electrically connected to a prescribed substrate.

4. The PTC device according to Claim 2, wherein the lead functions as a first lead disposed on the other metal of the PTC component, and
the PTC device further comprises a second lead electrically connected to the metal layer of the metal layer-retaining insulating layer.

5. The PTC device according to Claim 3 or 4, wherein the first lead is formed so as to be connected electrically to a prescribed electrical element.

6. The PTC device according to Claim 5, wherein the prescribed electrical element is a cathode terminal of a battery pack.

7. The PTC device according to Claim 6, wherein the second lead is formed so as to be connected electrically to other electrical element.

8. The PTC device according to Claim 7, wherein said other electrical element is a wiring substrate that allows the PTC device to function as a circuit protection device as to the prescribed electrical element.

9. The PTC device according to any one of Claims 1-8, wherein the metal layer-retaining insulating layer is a metal layer-lined insulating resin layer which comprises an insulating resin layer as the insulating layer.

10. An electrical apparatus comprising the PTC device according to any one of Claims 1-9.

11. The electrical apparatus according to Claim 10, which is a battery pack.
